# EUROPÄISCHE PATENTSCHRIFT

(11) **EP 2 006 461 B1**
(45) Veröffentlichungstag und Bekanntmachung des Hinweises auf die Patenterteilung: **23.09.2015**
(21) Anmeldenummer: 08010405.2
(22) Anmeldetag: 07.06.2008
(51) Int. Cl.: E04B 1/76, E04F 13/08, F16B 13/14

(54) **Verfahren zur Befestigung einer Wärmedämmplatte an einer Bauwerksfläche mit einem Befestigungselement**
Method of fixing a heat insulation plate to a construction surface with a fixing element
Procédé de fixation d'une plaque isolante sur une surface de chantier à l'aide d'un élément de fixation

(30) Priorität: 20.06.2007 DE 102007028190
(43) Veröffentlichungstag der Anmeldung: 24.12.2008
(60) Teilanmeldung: 14401079.0
(73) Patentinhaber: fischerwerke GmbH & Co. KG, 72178 Waldachtal (DE)
(72) Erfinder: Renz, Jürgen, 72202 Nagold (DE)

(56) Entgegenhaltungen:
- EP-A1- 0 033 951
- EP-A1- 0 467 098
- EP-A2- 1 357 301
- DE-A1- 3 815 551
- DE-A1-102004 020 118
- DE-C1- 19 840 521

## Beschreibung

Die Erfindung betrifft ein Verfahren zur Befestigung einer Wärmedämmplatte an einer Bauwerksfläche mit einem Befestigungselement gemäß den Merkmalen des Oberbegriffs des Anspruchs 1. Unter "Wärmedämmplatten" im Sinne der Erfindung sind wärmedämmende Materialien, also auch Wärmedämmmatten aus beispielsweise Glas-, Stein- oder Holzwolle zu verstehen. Der Begriff "Bauwerksfläche" ist allgemein im Sinne einer Wärme zu dämmenden Fläche als Ankergrund zu verstehen. Anders als eine mathematische Fläche hat die Bauwerksfläche eine Dicke, sie ist beispielsweise eine gemauerte oder betonierte Wand. Ebenso wie an einer Wand ist eine Befestigung einer Wärmedämmplatte mit dem erfindungsgemäßen Befestigungselement an beispielsweise einer Decke oder einem Boden möglich. Das erfindungsgemäße Befestigungselement dient zur Anbringung eines sog. Wärmedämmverbundsystems (WDVS) an einem Gebäude oder sonstigen Bauwerk.

Die Offenlegungsschrift DE 10 2004 020 118 A1 offenbart ein rohrförmiges Befestigungselement zu einer Abstandsbefestigung einer Vorsatzschale an einem Mauerwerk. Ein vorderer Bereich des Befestigungselements bildet einen Verankerungsbereich zur Verankerung des Befestigungselements in der Bauwerksfläche. Ein hinterer Bereich des Befestigungselements bildet einen Befestigungsbereich zur Befestigung der Vorsatzschale am Befestigungselement. Der Verankerungsbereich und der Befestigungsbereich weisen seitliche Austrittsöffnungen für Klebstoff auf. Das Befestigungselement wird durch ein Bohrloch durch die Vorsatzschale in die Bauwerksfläche eingebracht, so dass sich der Verankerungsbereich in der Bauwerksfläche und der Befestigungsbereich in der Vorsatzschale befinden. Anschließend wird Klebstoff in das Befestigungselement eingebracht, der durch die Austrittsöffnungen austritt und den Verankerungsbereich des Befestigungselements mit der Bauwerksfläche sowie den Befestigungsbereich des Befestigungselements mit der Vorsatzschale verklebt. Die Vorsatzschale wird mit Abstand von der Bauwerksfläche befestigt. Ein mittlerer Bereich des Befestigungselements weist keine Austrittsöffnungen für den Klebstoff auf, damit kein Klebstoff im Zwischenraum zwischen der Vorsatzschale und der Bauwerksfläche austritt. Ein Befestigungselement für eine Wärmedämmplatte offenbart die Patentschrift DE 198 40 521 C1. Dieses Befestigungselement weist eine teleskopierbare Hülse mit einem seitlich abstehenden Flansch auf. Die Hülse wird in ein Bohrloch in einer Wärmedämmplatte eingebracht, so dass sie auf einer Bauwerksfläche aufsitzt, an der die Wärmedämmplatte befestigt wird. Durch die Teleskopierbarkeit stellt sich eine Länge der Hülse auf eine Dicke der Wärmedämmplatte ein, die Hülse wird so weit zusammengeschoben, dass ihr Flansch auf der Wärmedämmplatte aufsitzt. Zur Verankerung in der Bauwerksfläche ist ein Spreizdübel vorgesehen, der ein separates Teil ist und durch ein Loch in einem Grund der teleskopierbaren Hülse gesteckt wird. Zur Verankerung wird der Spreizdübel durch Einbringen einer Spreizschraube oder eines Spreiznagels aufgespreizt. In die Hülse wird ein Klebstoff eingebracht, der in einem Zwischenraum zwischen der Wärmedämmplatte und der Bauwerksfläche austritt und die Wärmedämmplatte mit der Bauwerksfläche verklebt. Es besteht ein Zwischenraum zwischen der Wärmedämmplatte und der Bauwerksfläche.

Dokument DE 198 40 521 C1 offenbart ein Verfahren zur Befestigung einer Wärmedämmplatte an einer Bauwerksfläche mit einem Befestigungselement gemäß den Merkmalen des Oberbegriffs des Anspruchs 1.

Ein weiteres Befestigungselement für eine Wärmedämmplatte offenbart die nachveröffentlichte Offenlegungsschrift DE 10 2006 021 513 A1. Dieses Befestigungselement weist einen Hohlschaft ebenfalls mit einem Flansch an einem Ende auf. Der Hohlschaft ist mit Austrittsöffnungen für Klebstoff in einem vorderen Bereich versehen, die sich in der Bauwerksfläche und in einem Zwischenraum zwischen der Wärmedämmplatte und der Bauwerksfläche befinden, wenn die Wärmedämmplatte an der Bauwerksfläche befestigt ist. Dadurch tritt Klebstoff zur Verankerung des Befestigungselements in der Bauwerksfläche und es tritt Klebstoff im Zwischenraum zwischen der Wärmedämmplatte und der Bauwerksfläche aus, der die Wärmedämmplatte mit der Bauwerksfläche verklebt.

Aufgabe der Erfindung ist, ein alternatives Verfahren zur Befestigung einer Wärmedämmplatte an einer Bauwerksfläche vorzuschlagen.

Diese Aufgabe wird erfindungsgemäß durch ein Verfahren mit den Merkmalen des Anspruchs 1 gelöst. Das verwendete Befestigungselement ist rohrförmig. Es weist einen Verankerungsbereich, der sich über einen Teil einer Länge des Befestigungselements erstreckt, einen Befestigungsbereich, der sich über einen anderen Teil der Länge des Befestigungselements erstreckt, und einen Zwischenbereich zwischen dem Verankerungsbereich und dem Befestigungsbereich auf. Der Verankerungsbereich dient zur Verankerung, also zur Befestigung des Befestigungselements in der Bauwerksfläche. Ist das Befestigungselement in vorgesehener Weise gesetzt, befindet sich der Verankerungsbereich zumindest mit einem Teil seiner Länge in der Bauwerksfläche. Der Befestigungsbereich dient zur Befestigung der Wärmedämmplatte am Befestigungselement, er befindet sich zumindest mit einem Teil seiner Länge in der Wärmedämmplatte, wenn diese in vorgesehener Weise mit dem erfindungsgemäßen Befestigungselement befestigt ist. Im Befestigungsbereich weist das Befestigungselement mindestens eine Austrittsöffnung für einen Klebstoff auf. Dabei ist "Klebstoff" allgemein im Sinne einer aushärtenden und einen Stoffschluss bewirkenden Masse zu verstehen. Außer Klebstoffen als solchen kommen auch Mörtel, beispielsweise Kunstharzmörtel als Klebstoff in Betracht. Auch ein Schaum, beispielsweise ein Polyurethanschaum, kann als Klebstoff verwendet werden. Ist das erfindungsgemäße Befestigungselement gesetzt, wird Klebstoff in seinen Befestigungsbereich eingebracht, der durch die mindestens eine Austrittsöffnung austritt und die den Verankerungsbereich umgebende Wärmedämmplatte mit dem Befestigungselement verklebt. Da sich der Befestigungsbereich des Befestigungselements in der Wärmedämmplatte befindet, bewirkt dieser zusätzlich einen Reibschluss in Längsrichtung und einen Formschluss in Querrichtung des Befestigungselements, also einen Reibschluss senkrecht zur Bauwerksfläche und einen Formschluss parallel zur Bauwerksfläche, an der die Wärmedämmplatte befestigt ist. Außer dem Stoffschluss durch die Klebung wird mit dem erfindungsgemäßen Befestigungselement eine mechanische Verbindung durch den Reib- und den Formschluss erzielt.

Die Verankerung des Verankerungsbereichs des Befestigungselements in der Bauwerksfläche kann grundsätzlich in gleicher Weise erfolgen wie die Befestigung der Wärmedämmplatte am Befestigungsbereich des Befestigungselements. Das Wort "Verankerung" ist allgemein im Sinne von einer Befestigung zu verstehen, die Verwendung eines anderen Wortes für den Verankerungsbereich als für den Befestigungsbereich ist nicht dahingehend auszulegen, dass die Befestigung des Verankerungsbereichs in anderer Weise erfolgen muss als die Befestigung des Befestigungsbereichs.

Der Befestigungsbereich des Befestigungselements weist einen größeren Umfang auf als der Verankerungsbereich. Es ist also ein Durchmesser oder ein Querschnitt des Befestigungsbereichs größer als ein Durchmesser oder Querschnitt des Verankerungsbereichs. Die Umfangs- oder Querschnittsvergrößerung kann beispielsweise stufenförmig oder schräg (konisch) zwischen dem Verankerungsbereich und dem Befestigungsbereich erfolgen. Durch den größeren Umfang weist der Befestigungsbereich eine größere Kontaktfläche mit der Wärmedämmplatte auf. Dadurch ist der Halt der Wärmedämmplatte auf dem Befestigungselement verbessert, d.h. der durch die Verklebung bewirkte Stoffschluss ist aufgrund der größeren Klebefläche verbessert. Ein weiterer Vorteil ist, dass in die Bauwerksfläche mit einem kleineren Durchmesser gebohrt werden kann. Das ist insbesondere wegen der Härte der Bauwerksfläche von Vorteil, die üblicherweise aus Mauerwerk oder Beton besteht.

Weiterer Vorteil der Erfindung ist, dass Wärmedämmplatten unterschiedlicher Dicke befestigt werden können, die Wärmedämmplatte muss lediglich mindestens so dick sein wie der Befestigungsbereich des Befestigungselements lang ist. Es sind deswegen keine unterschiedlichen Größen an Befestigungselementen für verschieden dicke Wärmedämmplatten erforderlich. Die Erfindung vermeidet Kältebrücken.

Im Zwischenbereich zwischen dem Verankerungsbereich und dem Befestigungsbereich weist das Befestigungselement keine Austrittsöffnung auf. Ist das Befestigungselement in vorgesehener Weise gesetzt, befindet sich der Zwischenbereich im Grenzbereich der Bauwerksfläche und der Wärmedämmplatte. Dort tritt, weil keine Austrittsöffnung vorhanden ist, kein Klebstoff aus. Die Erfindung vermeidet einen Klebstoffaustritt zwischen die Wärmedämmplatte und die Bauwerksfläche. Zwischen die Wärmedämmplatte und die Bauwerksfläche austretender Klebstoff würde die Wärmedämmplatte von der Bauwerksfläche abdrücken, das vermeidet die Erfindung. Ein geringer Klebstoffaustritt zwischen die Wärmedämmplatte und die Bauwerksfläche ist zwar grundsätzlich unerwünscht, kann jedoch akzeptabel sein. Der Übergang vom kleineren Umfang des Verankerungsbereichs zum größeren Umfang des Befestigungsbereichs kann den Zwischenbereich oder einen Teil des Zwischenbereichs des erfindungsgemäßen Befestigungselements bilden oder es bildet umgekehrt der Übergang vom kleineren Umfang des Verankerungsbereichs zum größeren Umfang des Befestigungsbereichs Teil des Zwischenbereichs. Auch können der Zwischenbereich und der Übergang vom kleineren Umfang des Verankerungsbereichs zum größeren Umfang des Befestigungsbereichs verschiedene Bereiche des erfindungsgemäßen Befestigungselements sein.

In einer nicht beanspruchten Ausführungsform kann der Verankerungsbereich des Befestigungselements als Dübel zu einer mechanischen Verankerung in der Bauwerksfläche ausgebildet sein. Dabei kommen grundsätzlich alle Arten von Dübeln oder jedenfalls von Kunststoffdübeln in Betracht, also außer Spreizdübeln, die mit einem Nagel, einer Schraube oder einem sonstigen Spreizelement aufgespreizt werden, auch solche Dübel, die durch Eintreiben in ein Bohrloch in der Bauwerksfläche befestigt werden, also beispielsweise Dübel nach Art von Spannhülsen oder Dübel mit Klemmelementen, die gegen ein Herausziehen des Dübels sperren. Vorzugsweise ist der Verankerungsbereich des Befestigungselements als Spreizdübel ausgebildet, wenn er als Dübel ausgebildet ist.

Eine an sich bevorzugte Ausgestaltung der Erfindung sieht eine Verklebung des Befestigungselements auch in der Bauwerksfläche vor. Dazu weist der Verankerungsbereich mindestens eine seitliche Austrittsöffnung für Klebstoff auf. "Seitlich" bedeutet beispielsweise in einer Umfangswand des Befestigungselements. Weiterer Vorteil dieser Ausgestaltung der Erfindung ist, dass das Befestigungselement mit einem Klebstoff in der Bauwerksfläche verankert und mit einem anderen Klebstoff die Wärmedämmplatte mit dem Befestigungselement verklebt werden kann. Ein Loch in der Wärmedämmplatte hinter dem Befestigungselement kann nochmals mit einem anderen Material, das billiger ist oder eine bessere Isolationswirkung aufweist, ausgefüllt werden, beispielsweise mit einem (Polyurethan-)Schaum.

Vorzugsweise weisen der Verankerungsbereich und/oder der Befestigungsbereich eine Anzahl Austrittsöffnungen für Klebstoff auf, die hintereinander und in Umfangsrichtung (gleich oder ungleich) verteilt angeordnet sind. Dadurch wird ein über die Fläche des Verankerungsbereichs und/oder Befestigungsbereichs des Befestigungselements verteilter Klebstoffaustritt erreicht.

Eine Ausgestaltung der Erfindung sieht eine Einstecktiefenbegrenzung für eine Klebstoffdüse vor, die in das Befestigungselement steckbar ist bzw. auf die umgekehrt das Befestigungselement aufsetzbar ist. Die Einstecktiefenbegrenzung kann an der Querschnittsvergrößerung zwischen dem Verankerungsbereich und dem Befestigungsbereich gebildet sein.

Grundsätzlich muss das Befestigungselement nicht kreisförmig sein, vorzugsweise weist allerdings zumindest sein Verankerungsbereich eine zylindrische Außenfläche auf. Sofern die Außenfläche Ausnehmungen aufweist, ist eine gedachte Hüllfläche der Außenfläche zylinderförmig. Der Verankerungsbereich ist dadurch an ein zylindrisches Bohrloch angepasst. Der Befestigungsbereich kann beispielsweise auch eine Mehrkantform, eine Sternform, ein Vielzahnprofil oder Rippen aufweisen.

Um eine Kältebrücke zu vermeiden, besteht das erfindungsgemäße Befestigungselement insbesondere aus einem thermisch isolierenden Material. Es kann aus Kunststoff hergestellt sein.

Zum Befestigen einer Wärmedämmplatte an einer Bauwerksfläche sieht das erfindungsgemäße Verfahren mit den Merkmalen des Anspruchs 1 vor, dass ein Loch durch die Wärmedämmplatte in die Bauwerksfläche gebohrt wird. Das Befestigungselement wird, vor oder nach dem Bohren, auf eine Klebstoffdüse beispielsweise einer Klebstoffpistole aufgesetzt, was gleichbedeutend mit einem Stecken der Klebstoffdüse in das Befestigungselement ist. Um eine Axialkraft übertragen zu können, weist das Befestigungselement oder die Klebstoffdüse eine Einstecktiefenbegrenzung auf. Das auf die Klebstoffdüse aufgesetzte Befestigungselement wird mit der Klebstoffdüse durch das zuvor gebohrte Loch in die Wärmedämmplatte eingebracht, so weit, dass der Verankerungsbereich des Befestigungselements sich zumindest mit einem Teil seiner Länge in der Bauwerksfläche befindet. Der Befestigungsbereich befindet sich zumindest mit einem Teil seiner Länge in der Wärmedämmplatte. Durch die Klebstoffdüse wird Klebstoff in das Befestigungselement eingebracht, der durch die Austrittsöffnungen im Verankerungsbereich und im Befestigungsbereich austritt. Die Klebstoffdüse wird aus dem Befestigungselement herausgezogen, wobei das Herausziehen mit dem Füllen des Befestigungselements mit Klebstoff erfolgen kann. Vorzugsweise wird das Loch in der Wärmedämmplatte vollständig mit Klebstoff gefüllt. Zusätzlich zur Befestigung mit dem erfindungsgemäßen Befestigungselement kann die Wärmedämmplatte punkt- oder linienförmig oder flächig auf die Bauwerksfläche geklebt werden.

Sofern der Befestigungsbereich einen größeren Querschnitt aufweist als der Verankerungsbereich, kann das Bohrloch in den meisten herkömmlichen Wärmedämmplatten mit dem Befestigungselement aufgeweitet werden. Nur sehr harte Wärmedämmplatten können ein Aufbohren oder sonstiges Aufweiten des Lochs in der Wärmedämmplatte erforderlich machen. Mit dem erfindungsgemäßen Verfahren wird das Befestigungselement nach dem Bohren des Lochs durch die Wärmedämmplatte in die Bauwerksfläche mit der Klebstoffdüse gesetzt und der Klebstoff eingebracht, das Einbringen des Befestigungselements und das Kleben erfolgen zeitsparend in einem Arbeitsschritt.

Eine Weiterbildung der Erfindung sieht vor, dass der Klebstoff zuerst in den Verankerungsbereich des Befestigungselements eingebracht wird, so dass er aus dessen Austrittsöffnung/en austritt. Dadurch lässt sich ein ausreichender Klebstoffaustritt im Verankerungsbereich, d.h. in der Bauwerksfläche sicherstellen. Danach wird die Klebstoffdüse zurückgezogen und Klebstoff in den Befestigungsbereich eingebracht, der aus dessen Austrittsöffnung/en austritt, um die Wärmedämmplatte mit dem Befestigungsbereich zu verkleben.

Eine Ausgestaltung der Erfindung sieht vor, in den Verankerungsbereich einen anderen Klebstoff einzubringen als in den Befestigungsbereich. Es lassen sich an den Werkstoff der Bauwerksfläche und der Wärmedämmplatte angepasste Klebstoffe verwenden.

Die erfindungsgemäße Anordnung ist vorstehend anhand der Erläuterung des Befestigungselements und des Verfahrens zur Befestigung der Wärmedämmplatte mit dem Befestigungselement an der Bauwerksfläche erläutert worden. Zur Vermeidung von Wiederholungen wird hinsichtlich der Anordnung auf die Erläuterung des Befestigungselements und des Verfahrens verwiesen. Der Zwischenbereich des Befestigungselements, der keine Austrittsöffnung aufweist, befindet sich an einer Grenzfläche zwischen der Wärmedämmplatte und der Bauwerksfläche oder er durchsetzt die Grenzfläche. Er vermeidet einen Klebstoffaustritt zwischen die Wärmedämmplatte und die Bauwerksfläche, der die Wärmedämmplatte von der Bauwerksfläche abheben würde. Ein geringer Klebstoffaustritt in den Zwischenbereich zwischen der Wärmedämmplatte und der Bauwerksfläche ist zwar unerwünscht, kann jedoch akzeptabel sein.

Das Befestigungselement ist insbesondere in der Wärmedämmplatte versenkt und das Loch in der Dämmstoffplatte hinter dem Befestigungselement mit Klebstoff ausgefüllt. Das Loch wird dadurch verschlossen, so dass eine ebene Oberfläche der Wärmedämmplatte zum Aufbringen eines Putzes besteht. Außerdem wird durch das Ausfüllen des Bohrlochs in der Wärmedämmplatte die Wärmedämmung im Bereich des Befestigungselements aufrecht erhalten. Aufgrund des Versenkens des Befestigungselements in der Wärmedämmplatte ist keine Anpassung der Länge des Befestigungselements an eine Dicke der Wärmedämmplatte erforderlich. Mit Befestigungselementen einer Länge lassen sich Wärmedämmplatten unterschiedlicher Dicke befestigen.

Die Erfindung wird nachfolgend anhand in der Zeichnung dargestellter Ausführungsbeispiele näher erläutert. Es zeigen:
- Figur 1: ein erfindungsgemäßes Befestigungselement in perspektivischer Darstellung schräg von hinten;
- Figuren 2-7: aufeinanderfolgende Verfahrensschritte beim Setzen des Befestigungselements aus Figur 1 gemäß der Erfindung; und
- Figur 8: eine zweite Ausführungsform eines Befestigungselements in perspektivischer Darstellung schräg von vorn.

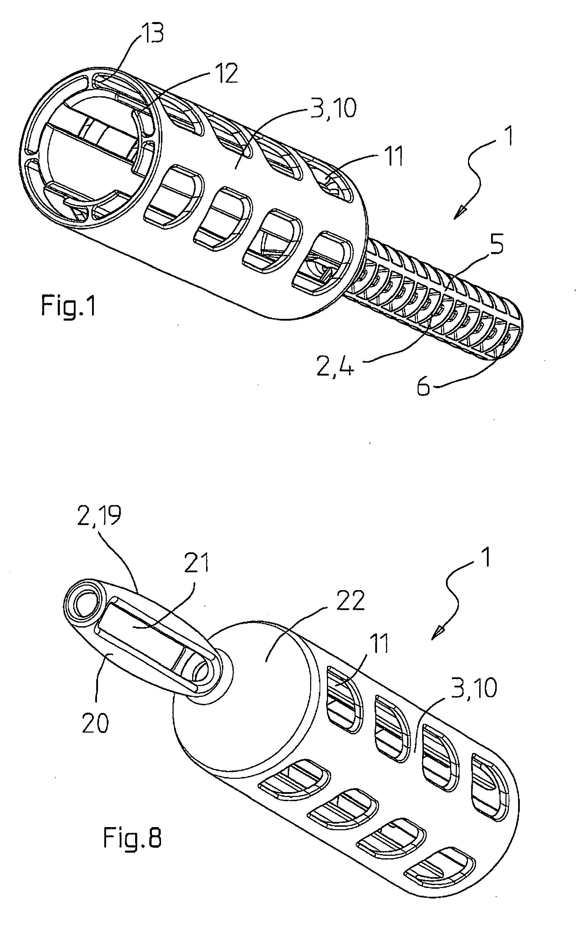

Das in Figur 1 dargestellte erfindungsgemäße Befestigungselement 1 dient zur Befestigung einer Wärmedämmplatte an einer Bauwerksfläche, beispielsweise einer Gebäudewand. Das Befestigungselement 1 besteht aus Kunststoff und weist zwei rohrförmige, sich in Längsrichtung des Befestigungselements 1 erstreckende Bereiche auf. Die Umfangsflächen oder Hüllflächen der beiden Bereiche sind zylindrisch, die beiden Bereiche weisen unterschiedliche Durchmesser auf. Der Bereich mit dem kleineren Durchmesser bildet einen Verankerungsbereich 2, er dient zur Verankerung des Befestigungselements 1 in einem Loch in der Bauwerksfläche. Der Bereich mit dem größeren Durchmesser bildet einen Befestigungsbereich 3 und dient zur Befestigung der Wärmedämmplatte am Befestigungselement 1. An einem dem Befestigungsbereich 3 fernen Stirnende ist der Verankerungsbereich 2 geschlossen. Der Verankerungsbereich 2 weist lochringscheibenförmige Rippen 4 auf, die gleichachsig mit Abstand hintereinander angeordnet sind und die durch Längsstege 5 gehalten sind. Zwischen den Rippen 4 weist der Verankerungsbereich 2 Austrittsöffnungen 6 für Klebstoff auf. Die Rippen 4 sind einstückig mit den Längsstegen 5 und diese wiederum einstückig mit dem Befestigungselement 1.

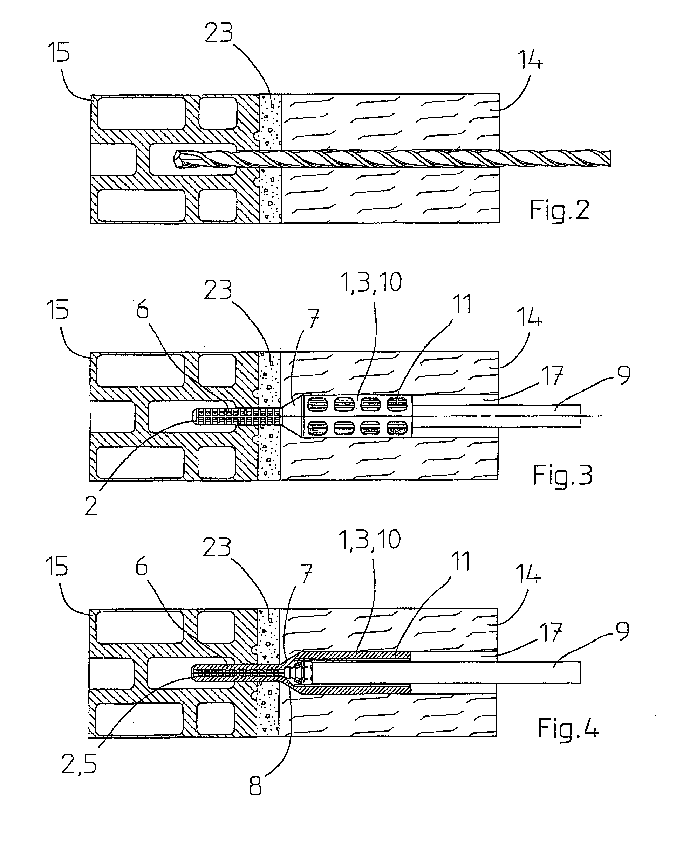

Mit einem konischen Übergang 7, der in Figuren 3-6 zu sehen ist, vergrößert sich ein Außendurchmesser des Befestigungselements 1 vom Verankerungsbereich 2 zum Befestigungsbereich 3. Innerhalb des konischen Übergangs 7 erweitert sich ein Innenraum des rohrförmigen Befestigungselements 1 ebenfalls mit einem Konus, der eine Einstecktiefenbegrenzung 8 für eine Klebstoffdüse 9 bildet (Figuren 4-6).

Der Befestigungsbereich 3 weist eine zylinderrohrförmige Umfangswand 10 auf, die großflächige Austrittsöffnungen 11 für Klebstoff aufweist. In Draufsicht sind die Austrittsöffnungen 11 näherungsweise rechteckig mit gerundeten Ecken. Die Austrittsöffnungen 11 sind in Längsrichtung hintereinander und über den Umfang verteilt angeordnet. Mit Abstand innerhalb der Umfangswand 10 weist der Befestigungsbereich 3 des Befestigungselements 1 zylinderförmige Schalen 12 auf, die über Längsrippen 13 in ihren Längsmitten einstückig mit der Umfangswand 10 des Befestigungsbereichs 3 sind. Die Schalen 12 erstrecken sich in Längsrichtung über eine Länge des Befestigungsbereichs 10. In Umfangsrichtung weisen die Schalen 12 Abstand in den Bereichen auf, in denen sich die Austrittsöffnungen 11 für den Klebstoff befinden.

Der konische Übergang 7 bildet zugleich auch einen Zwischenbereich des Befestigungselements 1 zwischen dem Verankerungsbereich 2 und dem Befestigungsbereich 3. Im Zwischenbereich weist das Befestigungselement 1 keine Austrittsöffnungen auf.

Zur erfindungsgemäßen Befestigung einer Wärmedämmplatte 14 an einer Bauwerksfläche 15 wird wie in Figur 2 zu sehen durch die Wärmedämmplatte 14 hindurch ein Loch 17 in die Bauwerksfläche 15 gebohrt. Im dargestellten Ausführungsbeispiel ist als Bauwerksfläche 15 eine Gebäudewand aus Lochziegeln gewählt, was allerdings für die Erfindung nicht zwingend ist. Die Wärmedämmplatte 14 ist mit einem Klebstoff 23, einem Mörtel oder dgl. an die Bauwerksfläche 15 geklebt. Das ist allerdings nicht zwingend, die Wärmedämmplatte 14 kann zum Bohren auch gehalten werden.

Zum Einbringen wird das Befestigungselement 1 auf eine Klebstoffdüse 9 beispielsweise einer im Übrigen nicht dargestellten Klebstoffpistole aufgesetzt und mit der Klebstoffdüse 9 in das zuvor gebohrte Loch eingebracht. Dabei liegt die Klebstoffdüse 9 an der Einstecktiefenbegrenzung 8 des Befestigungselements 1 an, so dass eine Axialkraft mit der Klebstoffdüse 9 auf das Befestigungselement 1 ausgeübt werden kann. Der Verankerungsbereich 2 des Befestigungselements 1 gelangt wie in Figur 3 zu sehen in das Loch in der Bauwerksfläche 15, der Befestigungsbereich 3 befindet sich in der Wärmedämmplatte 14. Eine Länge des Befestigungsbereichs 3 einschließlich des konischen Übergangs 7 ist kürzer als die Wärmedämmplatte 14 dick ist, so dass das Befestigungselement 1 in die Wärmedämmplatte 14 versenkt ist. Figuren 3 und 4 zeigen den gleichen Zustand des Befestigungselements 1, wobei in Figur 3 das Befestigungselement 1 in Ansicht und in Figur 4 im Achsschnitt dargestellt ist.

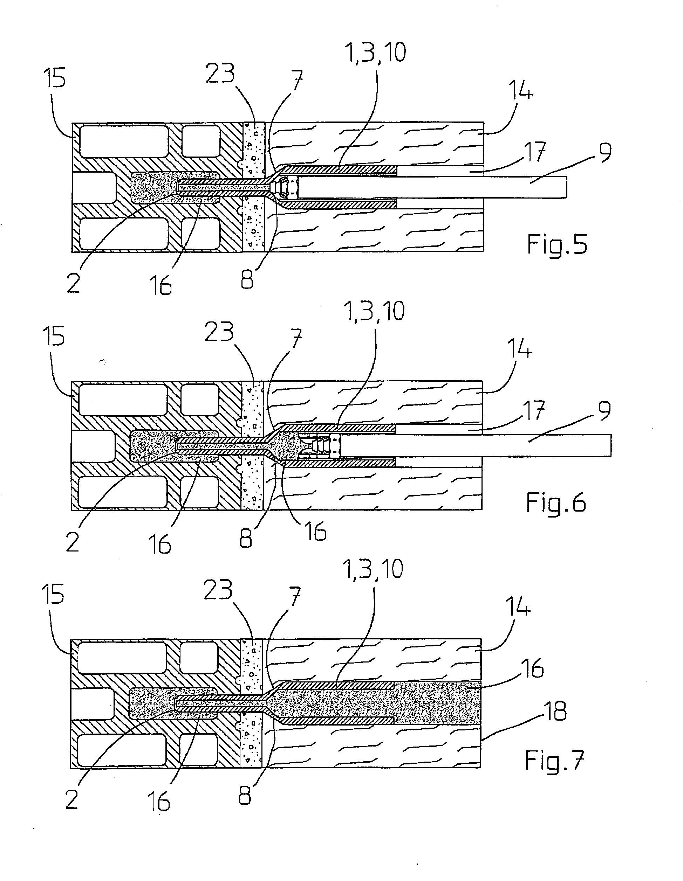

In einem nachfolgenden Verfahrensschritt wird mit der Klebstoffdüse 9 Klebstoff 16 in den Verankerungsbereich 2 des Befestigungselements 1 eingebracht. Der Klebstoff 16 tritt durch die Austrittsöffnungen 6 aus, verteilt sich um den Verankerungsbereich 2 im zuvor gebohrten Loch in der Bauwerksfläche 15 und in deren Hohlraum, wie es in Figur 5 zu sehen ist.

Wenn eine ausreichende Klebstoffmenge in den Verankerungsbereich 2 eingebracht worden ist, die eine belastbare Verklebung mit der Bauwerksfläche 15 sicherstellt, wird die Klebstoffdüse 9 wie in Figur 6 zu sehen, langsam zurückgezogen und dabei Klebstoff 16 in den Befestigungsbereich 3 des Befestigungselements 1 eingebracht. Der Klebstoff 16 tritt durch die Austrittsöffnungen 11 des Befestigungsbereichs 3 aus und verklebt die Wärmedämmplatte 14 mit dem Befestigungsbereich 3 des Befestigungselements 1. Außer dem Befestigungsbereich 3 wird beim Herausziehen der Klebstoffdüse 9 auch das Loch 17 in der Wärmedämmplatte 14 hinter dem Befestigungselement 1 mit Klebstoff 16 ausgefüllt. Den fertigen Zustand zeigt Figur 7, in der das Befestigungselement 1 mit der Bauwerksfläche 15 und die Wärmedämmplatte 14 mit dem Befestigungselement 1 verklebt ist. Zusätzlich hält das Befestigungselement 1 die Wärmedämmplatte 14 mechanisch durch Reibschluss und parallel zur Bauwerksfläche 15 durch Formschluss. Wie in Figur 7 zu sehen, ist das Loch 17 in der Wärmedämmplatte 14 vollständig mit Klebstoff 16 ausgefüllt, so dass auch das Loch 17 thermisch isoliert ist. Auf einer Oberfläche 18 der Wärmedämmplatte 14 überstehender Klebstoff 16 wird erforderlichenfalls bündig abgeschnitten, so dass eine ebene Fläche ohne Löcher zum Verputzen gebildet ist.

Beim Einbringen des Befestigungselements 1 mit der Klebstoffdüse 9 weitet der konische Übergang 7 des Befestigungselements 1 das in die Wärmedämmplatte 14 gebohrte Loch 16 auf den Durchmesser des Befestigungsbereichs 3 des Befestigungselements 1 auf.

Als Klebstoff 16 wird im Ausführungsbeispiel ein Polyurethan-Schaum verwendet, der außer der Verklebung eine thermische Isolierung bewirkt. Es ist allerdings auch möglich, im Verankerungsbereich 2 einen anderen Klebstoff als im Befestigungsbereich 3 und ggf. im Loch 17 in der Wärmedämmplatte 14 hinter dem Befestigungselement 1 nochmals einen anderen Klebstoff, dort wegen der thermisch isolierenden Wirkung insbesondere einen Schaum, zu verwenden. Dadurch ist eine Anpassung der Klebstoffe an die verschiedenen Werkstoffe der Bauwerksfläche 15 und der Wärmedämmplatte 14 möglich. Das Einbringen eines einzigen Klebstoffs vereinfacht und beschleunigt die Befestigung der Wärmedämmplatte 14.

Dadurch, dass in dem Zwischenbereich zwischen dem Verankerungsbereich 2 und dem Befestigungsbereich 3 keine Austrittsöffnungen vorhanden sind, tritt kein Klebstoff aus dem Befestigungselement 1 zwischen die Wärmedämmplatte 14 und die Bauwerksfläche 15 aus. Dort unter Druck austretender Klebstoff würde die Wärmedämmplatte 14 von der Bauwerksfläche 15 abdrücken. Insbesondere ein Schaum als Kleber würde, weil er aufschäumt und dabei sein Volumen vergrößert, die Wärmedämmplatte 14 von der Bauwerksfläche 15 abdrücken, wenn er zwischen die Wärmedämmplatte 14 und die Bauwerksfläche 15 gelangt. Im Ausführungsbeispiel wird, wie bereits erwähnt, der keine Austrittsöffnungen aufweisende Zwischenbereich vom konischen Übergang 7 gebildet. Das ist allerdings nicht zwingend für die Erfindung.

Im Unterschied zu Figur 1 ist der Verankerungsbereich 2 des in Figur 8 dargestellten Befestigungselements 1 als Dübel, und zwar als Spreizdübel 19 ausgebildet. Der Spreizdübel 19 kann wie bekannte Spreizdübel, insbesondere Spreizdübel aus Kunststoff ausgebildet sein. Im dargestellten nicht beanspruchten Ausführungsbeispiel weist der Spreizdübel 19 zwei sich in Längsrichtung erstreckende Spreizelemente 20 auf, die durch einen quer durchgehenden Längsschlitz 21 voneinander getrennt sind. Durch Eindrehen einer nicht dargestellten Schraube oder Einschlagen eines nicht dargestellten Nagels werden die Spreizzunge 20 auseinandergedrückt, d.h. aufgespreizt und das Befestigungselement 1 dadurch mechanisch in einer in Figur 8 nicht dargestellten Bauwerksfläche verankert. Im Übrigen ist das in Figur 8 dargestellte erfindungsgemäße Befestigungselement 1 gleich ausgebildet wie das in Figur 1 dargestellte und funktioniert in gleicher Weise. Zur Vermeidung von Wiederholungen werden deswegen zur Erläuterung von Figur 8 die Erläuterungen von Figur 1 und auch von Figuren 2-7 in Bezug genommen. Gleiche Bauteile haben gleiche Bezugszahlen. Im Unterschied zu Figuren 1-7, in denen die Verankerung des Befestigungselements 1 durch eine Verklebung des Verankerungsbereichs 2 mit der Bauwerksfläche 15 erfolgt, erfolgt in Figur 8 die Verankerung des Befestigungselements 1 durch Aufspreizen seines als Spreizdübel 19 ausgebildeten Verankerungsbereichs 2 durch Eindrehen einer Schraube oder Eintreiben eines Nagels. Das Verkleben der Wärmedämmplatte 14 mit dem Befestigungselement 1 erfolgt in Figur 8 in gleicher Weise wie in Figur 1 durch Einbringen von Klebstoff in den Befestigungsbereich 3, der durch die Austrittsöffnungen 11 austritt. Der Übergang vom Verankerungsbereich 2 in den Befestigungsbereich 3 erfolgt in Figur 8 mit einer Ringstufe 22. Ein Kopf einer zum Aufspreizen des Spreizdübels 19 eingebrachten, nicht dargestellten Schraube oder eines Nagels befindet sich auf einer Innenseite der Ringstufe 22. Die Schraube oder der Nagel durchsetzen deswegen nicht den Befestigungsbereich 3 und bilden somit auch keine Kältebrücke, auch wenn sie aus Stahl bestehen.

## Patentansprüche

1. Verfahren zur Befestigung einer Wärmedämmplatte (14) an einer Bauwerksfläche (15), mit einem rohrförmigen Befestigungselement (1), das einen Verankerungsbereich (2), der sich über einen Teil einer Länge des Befestigungselements (1) erstreckt und zur Verankerung des Befestigungselements (1) in der Bauwerksfläche (15) dient, und einen Befestigungsbereich (3), der sich über einen anderen Teil der Länge des Befestigungselements (1) als der Verankerungsbereich (2) erstreckt und der zur Befestigung der Wärmedämmplatte (14) am Befestigungselement (1) dient, sowie einen Zwischenbereich aufweist, wobei der Befestigungsbereich (3) einen größeren Durchmesser als der Verankerungsbereich (2) aufweist,
wobei der Befestigungsbereich (3)
mindestens eine Austrittsöffnung (11) in einer Umfangswand für einen Klebstoff (16) aufweist, wobei der Zwischenbereich zwischen dem Verankerungsbereich (2) und dem Befestigungsbereich (3) angeordnet ist und keine Austrittsöffnung aufweist, wobei ein Loch (17) durch die Wärmedämmplatte (14) in die Bauwerksfläche (15) gebohrt wird, das Befestigungselement (1)in die Wärmedämmplatte (14) und in die Bauwerksfläche (15) eingebracht wird, so dass sich der Verankerungsbereich (2) in der Bauwerksfläche (15) und der Befestigungsbereich (3) in der Wärmedämmplatte (14) befinden, durch eine Klebstoffdüse (9) Klebstoff (16) in das Befestigungselement (1) eingebracht wird, der durch mindestens eine Austrittsöffnung (6) im Befestigungsbereich (3) des Befestigungselements (1) austritt, und die Klebstoffdüse (9) aus dem Befestigungselement (1) herausgezogen wird, **dadurch gekennzeichnet, dass** der Verankerungsbereich (2) mindestens eine Austrittsöffnung (6) in einer Umfangswand für einen Klebstoff (16) aufweist, aus dem Klebstoff (16) austritt, und dass das Befestigungselement (1) vor dem Einbringen in die Wärmedämmplatte (14) und in die Bauwerksfläche (15) auf die Klebstoffdüse (9) aufgesetzt wird und dass das Befestigungselement (1) mit der Klebstoffdüse (9) in die Wärmedämmplatte (14) und die Bauwerksfläche (15) eingebracht wird.

2. Verfahren nach Anspruch 1, **dadurch gekennzeichnet, dass** auch das Loch (17) in der Wärmedämmplatte (14) hinter dem Befestigungselement (1) mit Klebstoff (16) gefüllt wird.

3. Verfahren nach Anspruch 1, **dadurch gekennzeichnet, dass** mit der Klebstoffdüse (9) der Klebstoff (16) zuerst in den Verankerungsbereich (2) eingebracht wird und aus dessen Austrittsöffnung/en (6) austritt und dass danach die Klebstoffdüse (9) zurückgezogen und Klebstoff (16) in den Befestigungsbereich (3) eingebracht wird und aus dessen Austrittsöffnungen (11) austritt.

4. Verfahren nach Anspruch 1, **dadurch gekennzeichnet, dass** in den Verankerungsbereich (2) ein anderer Klebstoff (16) eingebracht wird als in den Befestigungsbereich (3).

## Claims

1. Method of fixing a thermal insulation panel (14) to the surface (15) of a built structure, with a tubular fixing element (1) having an anchoring region (2) which extends over a portion of a length of the fixing element (1) and serves for anchoring the fixing element (1) in the surface (15) of the built structure, and having a fixing region (3) which extends over a portion of the length of the fixing element (1) different from the anchoring region (2) and which serves for fixing the thermal insulation panel (14) to the fixing element (1), and having an intermediate region, the fixing region (3) having a larger diameter than the anchoring region (2),
wherein the fixing region (3) has in a peripheral wall at least one outflow opening (11) for an adhesive (16), wherein the intermediate region is arranged between the anchoring region (2) and the fixing region (3) and has no outflow openings, wherein a hole (17) is drilled through the thermal insulation panel (14) into the surface (15) of the built structure, the fixing element (1) is introduced into the thermal insulation panel (14) and into the surface (15) of the built structure so that the anchoring region (2) is located in the surface (15) of the built structure and the fixing region (3) is located in the thermal insulation panel (14), adhesive (16) is introduced into the fixing element (1) through an adhesive nozzle (9), which adhesive flows out through at least one outflow opening (6) in the fixing region (3) of the fixing element (1), and the adhesive nozzle (9) is removed from the fixing element (1), **characterised in that** the anchoring region (2) has in a peripheral wall at least one outflow opening (6) for an adhesive (16), out of which adhesive (16) flows, and the fixing element (1) is mounted onto the adhesive nozzle (9) prior to introduction into the thermal insulation panel (14) and into the surface (15) of the built structure, and the fixing element (1) is introduced with the adhesive nozzle (9) into the thermal insulation panel (14) and the surface (15) of the built structure.

2. Method according to claim 1, **characterised in that** the hole (17) in the thermal insulation panel (14) behind the fixing element (1) is also filled with adhesive (16).

3. Method according to claim 1, **characterised in that** the adhesive (16) is first introduced with the adhesive nozzle (9) into the anchoring region (2) and flows out of the outflow opening(s) (6) thereof, and the adhesive nozzle (9) is then withdrawn and adhesive (16) is introduced into the fixing region (3) and flows out of the outflow openings (11) thereof.

4. Method according to claim 1, **characterised in that** an adhesive (16) introduced into the anchoring region (2) is different from that introduced into the fixing region (3).

## Revendications

1. Procédé de fixation d'un panneau (14) d'isolation thermique à une surface (15) d'un édifice, comportant un élément tubulaire de fixation (1) comprenant une zone d'ancrage (2) qui s'étend sur une partie de la longueur dudit élément de fixation (1) et sert à ancrer ledit élément de fixation (1) dans ladite surface (15) de l'édifice, et une zone de fixation (3) qui s'étend sur une partie de la longueur dudit élément de fixation (1) différant de celle de ladite zone d'ancrage (2), et sert à fixer ledit panneau (14) d'isolation thermique audit élément de fixation (1), ainsi qu'une zone intermédiaire, sachant que la zone de fixation (3) présente un plus grand diamètre que la zone d'ancrage (2), ladite zone de fixation (3) étant percée, dans une paroi périphérique, d'au moins un orifice de sortie (11) destiné à un adhésif, la zone intermédiaire étant interposée entre ladite zone d'ancrage (2) et ladite zone de fixation (3), et étant dépourvue d'orifice de sortie, sachant qu'un trou (17) est foré dans la surface (15) de l'édifice en traversant le panneau (14) d'isolation thermique, l'élément de fixation (1) étant inséré dans ledit panneau (14) d'isolation thermique et dans ladite surface (15) de l'édifice, de telle sorte que la zone d'ancrage (2) et la zone de fixation (3) soient situées, respectivement, dans ladite surface (15) de l'édifice et dans ledit panneau (14) d'isolation thermique, sachant que de l'adhésif (16), déversé dans l'élément de fixation (1) par l'intermédiaire d'une buse (9), sort en empruntant au moins un orifice de sortie (6) pratiqué dans la zone de fixation (3) dudit élément de fixation (1), et que la buse (9) à adhésif est extraite dudit élément de fixation (1), **caractérisé par le fait que** la zone d'ancrage (2) présente, dans une paroi périphérique, au moins un orifice de sortie (6) qui est destiné à un adhésif (16), et dont ledit adhésif (16) sort ; **par le fait que**, préalablement à l'insertion dans le panneau (14) d'isolation thermique et dans la surface (15) de l'édifice, l'élément de fixation (1) est mis en place sur la buse (9) à adhésif ; et **par le fait que** ledit élément de fixation (1) est inséré, avec ladite la buse (9) à adhésif, dans ledit panneau (14) d'isolation thermique et dans ladite surface (15) de l'édifice.

2. Procédé selon la revendication 1, **caractérisé par le fait que** le trou (17) pratiqué dans le panneau (14) d'isolation thermique est empli, lui aussi, d'adhésif (16) derrière l'élément de fixation (1).

3. Procédé selon la revendication 1, **caractérisé par le fait que** l'adhésif (16) est tout d'abord déversé dans la zone d'ancrage (2) au moyen de la buse (9), puis sort de l'orifice ou des orifices de sortie (6) de ladite zone ; et **par le fait que** ladite buse (9) à adhésif est ensuite retirée, puis de l'adhésif (16) est déversé dans la zone de fixation (3) et sort par les orifices de sortie (11) de cette dernière.

4. Procédé selon la revendication 1, **caractérisé par** le déversement, dans la zone d'ancrage (2), d'un adhésif (16) autre que dans la zone de fixation (3).
